# EUROPÄISCHE PATENTANMELDUNG

(11) **EP 4 133 941 A1**
(43) Veröffentlichungstag der Anmeldung: **15.02.2023**
(21) Anmeldenummer: 22186394.7
(22) Anmeldetag: 22.07.2022
(51) Int. Cl.: A21C 9/04, F16K 3/00

(54) **TEIGBANDFÖRDEREINRICHTUNG MIT EINER VORRICHTUNG ZUM ZUFÜHREN EINES PASTÖSEN LEBENSMITTELS**

(30) Priorität: 12.08.2021 DE 102021120978
(71) Anmelder: Fritsch Bakery Technologies GmbH & Co. KG, 97348 Markt Einersheim (DE)
(72) Erfinder: DELLER, Gregor, 86465 Welden (DE)
(74) Vertreter: Grünecker Patent- und Rechtsanwälte PartG mbB

(57) **Zusammenfassung**

Eine Teigbandfördereinrichtung (1) mit einer Vorrichtung (3) zum Zuführen eines pastösen Lebensmittels (3), insbesondere Fett oder Butter. Die Vorrichtung (2) umfasst eine Düse (6) und eine verstellbare Blende (7), die eine Platte (8) mit einer Öffnung (9) und einen Schieber (10) enthält, wobei der Schieber (10) dazu konfiguriert ist, die Öffnung (9) mindestens teilweise abzudecken und eine Durchlass-Querschnittsfläche (11) der Blende (7) in einer Zustellrichtung (Z) zu begrenzen. Die Teigbandfördereinrichtung zeichnet sich dadurch aus, dass der Schieber (10) in einer Verstellrichtung (V) verschiebbar ist, wobei die Verstellrichtung (V) relativ zu der Zustellrichtung (Z) in einem Winkel orientiert ist, der größer als 0 Grad ist.

## Beschreibung

Die Erfindung bezieht sich auf Teigbandfördereinrichtungen mit einer Vorrichtung zum Zuführen eines pastösen Lebensmittels.

Aus DE 199 15 096 A1 ist eine Teigverarbeitungsanlage bekannt, die ein Auftragen von Butter auf einen Teigstrang ermöglicht. Solche Anlagen werden häufig zum Einziehen von Butter, Margarine, oder anderen Fetten in Teigbänder eingesetzt. Dabei sollte die Menge an aufgetragenem Fett sehr genau dosierbar sein, um einerseits die gewünschte Teigqualität zu erreichen und andererseits den Fettverbrauch zu optimieren. Darüber hinaus sollte die Einstellung der aufgetragenen Fettmenge durch eine Bedienperson möglichst einfach und komfortabel zu bedienen sein.

Es ist eine Aufgabe der Erfindung, eine verbesserte Teigbandfördereinrichtung mit einer Vorrichtung zum Auftragen von pastösen Lebensmitteln anzugeben, die eine genauere und gleichzeitig einfachere Einstellung der aufgetragenen Fettmenge ermöglicht.

Diese Aufgabe wird gelöst durch eine Teigbandfördereinrichtung mit den Merkmalen des Anspruchs 1. Vorteilhafte Weiterbildungen sind in den abhängigen Ansprüchen angegeben.

Es wird eine Teigbandfördereinrichtung mit einer Vorrichtung zum Zuführen eines pastösen Lebensmittels, insbesondere Fett oder Butter, offenbart. Die Vorrichtung umfasst eine Düse und eine verstellbare Blende, die eine Platte mit einer Öffnung und einen Schieber enthält, wobei der Schieber dazu konfiguriert ist, die Öffnung mindestens teilweise abzudecken und eine Durchlass-Querschnittsfläche der Blende in einer Zustellrichtung zu begrenzen. Die Teigbandfördereinrichtung ist dadurch gekennzeichnet, dass der Schieber in einer Verstellrichtung verschiebbar ist, wobei die Verstellrichtung relativ zu der Zustellrichtung in einem Winkel orientiert ist, der größer als 0 Grad ist.

Durch einen Winkel, der größer als 0 Grad ist, zwischen der Zustellrichtung und der Verstellrichtung kann eine Übersetzung realisiert werden, die es einer Bedienperson ermöglichen kann, sehr kleine Veränderungen der Durchlass-Querschnittsfläche der Blende zu erreichen, ohne dass dabei besonders hohe Geschicklichkeitsanforderungen an die Bedienperson gestellt werden müssten. Gleichzeitig kann der Bedienkomfort optimiert werden, da eine günstigere Positionierung von Bedienelementen ermöglicht werden kann, wie später noch deutlicher werden wird. Als besonders geeignet haben sich dabei Winkel erwiesen, die kleiner als 180 Grad, vorzugsweise kleiner als 90 Grad, besonders bevorzugt zwischen 50 Grad und 85 Grad, sind.

Es ist denkbar, dass der Schieber durch mehrere Führungen führbar ist. Dadurch kann eine definierte Bewegung des Schiebers erreicht werden. Besonders günstig kann es sein, wenn die Führungen an oder in dem Schieber vorgesehen sind. Als Führung kann bspw. ein Langloch angesehen werden, das in dem Schieber angeordnet sein kann. Auch Führungen, die nicht in oder an dem Schieber vorgesehen sind, sind vorstellbar, z. B. eine oder mehrere Nuten in denen der Schieber verschiebbar gelagert sein kann.

Es kann vorteilhaft sein, wenn der Schieber durch eine Gewindespindel verschiebbar ist. Dadurch kann eine weitere Übersetzung zwischen einer Bewegung einer Bedienperson und der Bewegung des Schiebers erreicht werden, was wiederum die Genauigkeit der Einstellung der Blende verbessern kann.

Die Gewindespindel kann vorteilhafterweise mit einem Griffstück verbunden sein, welches seitlich, insbesondere in der Verstellrichtung, von der Blende beabstandet ist. Teigbandfördereinrichtungen mit einer Vorrichtung zum Zuführen von pastösen Lebensmitteln sind häufig lange Produktionslinien oder werden in solchen langen Produktionslinien eingesetzt. Solche Anlagen sind fast ausschließlich von einer seitlichen Position aus erreichbar. Seitlich kann dabei als eine Richtung angesehen werden, die quer, bspw. senkrecht, zu einer Produktions- und/oder Förderrichtung der Teigbandfördereinrichtung orientiert ist. Insbesondere wenn die Vorrichtung zum Zuführen von pastösen Lebensmitteln mittig über einem Teigband angeordnet ist, kann eine seitliche Beabstandung des Griffstücks von der Blende die Betätigung des Schiebers erleichtern. Als Griffstück können z. B. eine Kurbel, ein Drehknopf oder -knauf, ein Sterngriff oder ein Hebel angesehen werden.

Es ist vorteilhaft, wenn die Blende werkzeuglos demontierbar ist. Dies kann bspw. durch eine lösbare Befestigung durch Flügelmuttern oder -schrauben erreicht werden. Insbesondere sind Flügelschrauben denkbar, mit einem Schieber mit Langlöchern als Führungen eingreifen. Die Flügelschrauben können durch die Langlöcher schraubbar sein, wodurch Ränder der Langlöcher während des Einstellens der Blende an ihnen entlang gleiten können. Ist der Schieber in einer gewünschten Position, können die Flügelschrauben weiter angezogen werden, um den Schieber in dieser Position zu arretieren. Durch vollständiges Lösen der Flügelschrauben kann der Schieber von der Plate trennbar sein. Eine werkzeuglose Demontage der Blende kann die Reinigung der Vorrichtung erleichtern. Es ist außerdem vorteilhaft, wenn die Blende werkzeuglos von der Düse trennbar ist. Dies kann die Reinigung weiter vereinfachen.

Die Erfindung bezieht sich auf eine Teigfördereinrichtung der vorstehend beschriebenen Art. Im Folgenden wird eine vorteilhafte Ausführungsform beispielhaft anhand von Zeichnungen erläutert.
Figur 1 zeigt eine schematische Seitenansicht einer Teigbandfördereinrichtung mit einer Vorrichtung zum Zuführen eines pastösen Lebensmittels.
Figur 2 zeigt eine schematische seitliche Schnittansicht der Vorrichtung zum Zuführen eines pastösen Lebensmittels aus Figur 1.
Figur 3 zeigt eine schematische Ansicht auf eine Blende der Vorrichtung zum Zuführen eines pastösen Lebensmittels aus Figur 1.
Figur 4 zeigt die Ansicht aus Figur 3, wobei der Schieber der Blende der Vorrichtung zum Zuführen eines pastösen Lebensmittels gegenüber der Ansicht aus Figur 3 verstellt ist.

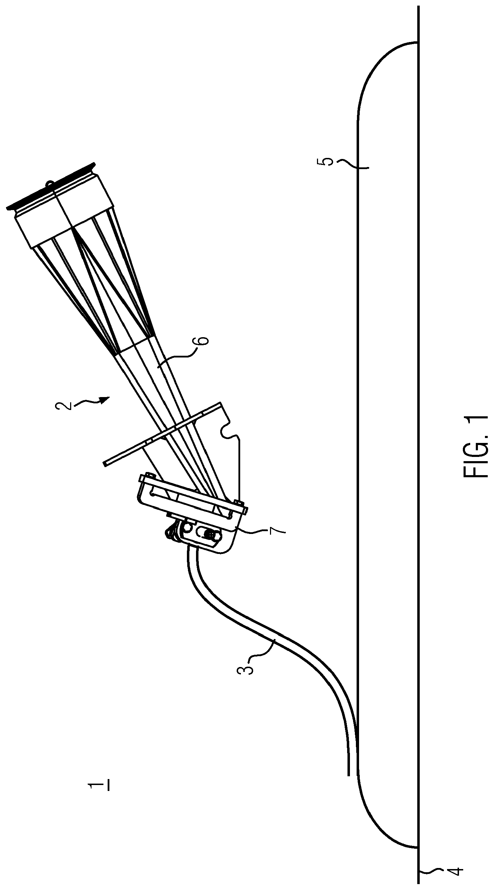

Figur 1 zeigt eine schematische Seitenansicht einer Teigbandfördereinrichtung 1. Die Teigbandfördereinrichtung 1 kann eine Vorrichtung 2 zum Zuführen eines pastösen Lebensmittels 3 aufweisen. Wie im gezeigten Ausführungsbeispiel, kann es sich bei dem pastösen Lebensmittel 3 um Fett oder Butter handeln. Die Teigbandfördereinrichtung 1 kann des Weiteren einen Förderer 4 umfassen. Der Förderer 4 kann dazu konfiguriert sein, ein Teigband 5 zu fördern. Wie im vorliegenden Ausführungsbeispiel kann es sich bei dem Förderer 4 um ein Förderband handeln. Wie im Folgenden noch näher erläutert werden wird, kann die Vorrichtung 2 eine Düse 6 umfassen. Die Vorrichtung 2 kann des Weiteren eine Blende 7 umfassen. Die Blende 7 kann dazu konfiguriert sein, eine Menge des durch die Vorrichtung 2 zugeführten Lebensmittels 3 einzustellen.

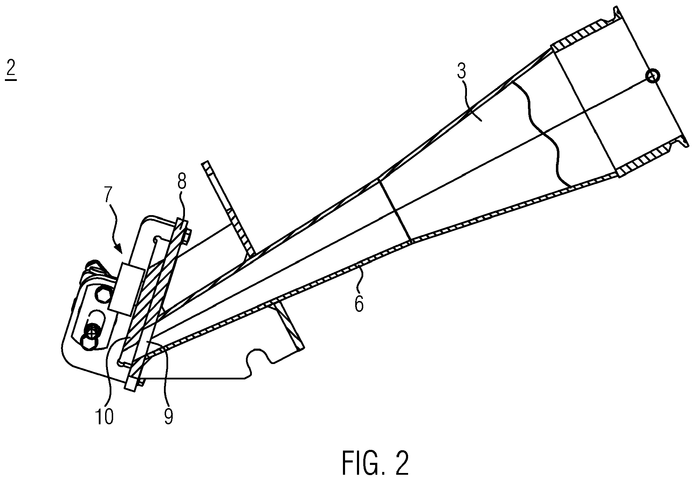

In Figur 2 ist die Vorrichtung 2 in einer schematischen, seitlichen Schnittansicht dargestellt. Es ist erkennbar, dass die Blende 7 eine Platte 8 umfassen kann. Die Platte 8 kann eine Öffnung 9 aufweisen. Die Öffnung 9 kann dazu konfiguriert sein, eine aus der Düse 6 heraustretende Menge des pastösen Lebensmittels 3 zu begrenzen. Die Blende kann des Weiteren einen Schieber 10 umfassen. Der Schieber 10 kann dazu konfiguriert sein, die Öffnung 9 mindestens teilweise abzudecken. Durch entsprechende Einstellung des Schiebers 10 kann die Menge an durch die Öffnung 9 hindurchtretendem Lebensmittel 3 weiter begrenzbar sein.

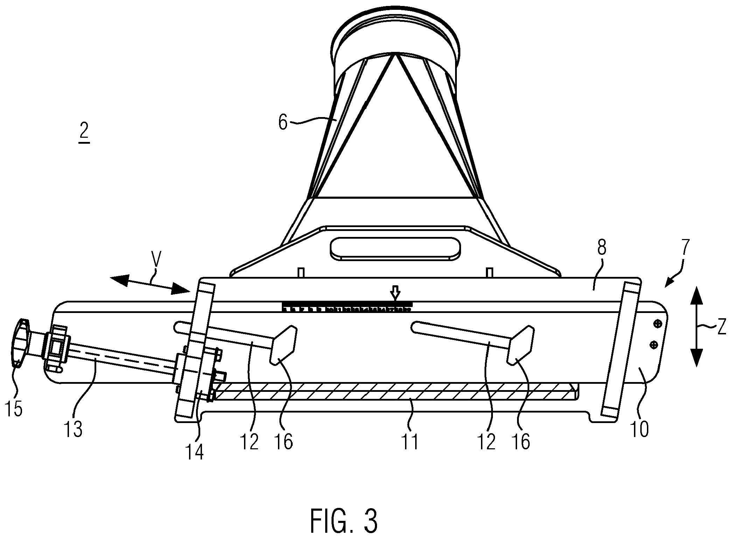

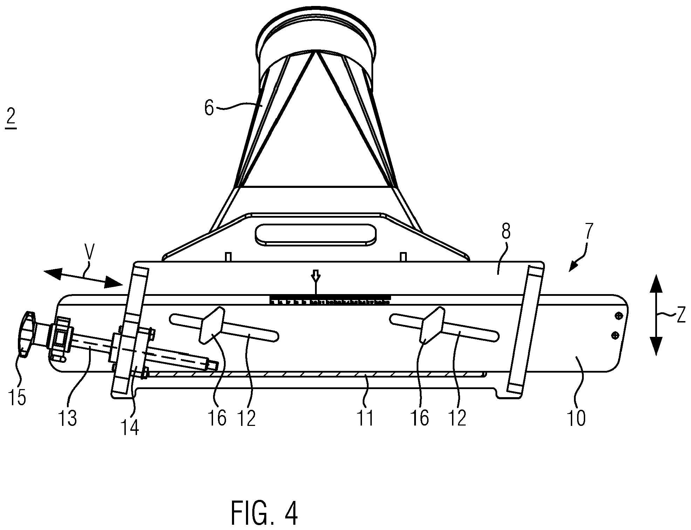

In Figur 3 ist die Vorrichtung 2 mit Blickrichtung frontal auf die Blende 7 dargestellt. Nun ist zu erkennen, dass die Blende 7 verstellbar sein kann. Dazu kann der Schieber 10 der Blende 7 in einer Verstellrichtung V verstellbar sein. Es ist des Weiteren zu erkennen, dass die Blende 7 ein Heraustreten des Lebensmittels 3 aus der Vorrichtung 2 auf einer Durchlass-Querschnittsfläche 11 (schraffiert dargestellt) gestattet. Durch zumindest teilweises Abdecken der Öffnung 9 kann der Schieber 10 die Durchlass-Querschnittsfläche 11 der Blende 7 in einer Zustellrichtung Z begrenzen. Dies wird anhand der unterschiedlichen Stellungen des Schiebers 10 in den Figuren 3 und 4 sichtbar. Ebenfalls ist zu erkennen, dass der Schieber 10, wie im vorliegenden Ausführungsbeispiel, durch zwei Führungen 12 führbar sein kann. Durch die Führungen 12 kann es ermöglicht werden, dass bei einer Verstellung des Schiebers 10 in der Verstellrichtung V die Ausdehnung der Durchlassquerschnittsfläche in der Zustellrichtung Z verringert wird. Wie in den Figuren 3 und 4 zu sehen, können die Zustellrichtung Z und die Verstellrichtung V in einem Winkel zueinander orientiert sein, der größer als 0° ist. Wie im vorliegenden Ausführungsbeispiel dargestellt, können die Führungen 12 in dem Schieber 10 vorgesehen sein. Im vorliegenden Ausführungsbeispiel sind die Führungen 12 beispielhaft als Langlöcher ausgeführt.

Die Verstellung des Schiebers 10 kann, wie im vorliegenden Ausführungsbeispiel, durch eine Gewindespindel 13 erfolgen. Die Gewindespindel 13 kann mit dem Schieber 10 und/oder mit der Platte 8 der Blende 7 jeweils drehbar verbunden sein. Des Weiteren kann die Gewindespindel 13 mit einer Mutter 14 eingreifen, die drehfest mit der Platte 8 verbunden sein kann. Darüber hinaus kann die Drehspindel drehfest mit einem Griffstück 15 verbunden sein. Durch die drehfeste Verbindung zwischen dem Griffstück 15 und der Gewindespindel 13 kann die Gewindespindel 13 durch eine Drehung des Griffstücks 15 drehbar sein. Durch eine Drehung der Gewindespindel 13 kann die Gewindespindel 13 in die Mutter 14 hinein oder aus dieser hinaus drehbar sein. Dadurch kann der Schieber 10 in der Verstellrichtung V verstellbar sein.

Wie in den Figuren 3 und 4 zu erkennen ist, kann das Griffstück 15 seitlich, insbesondere in der Verstellrichtung V, von der Blende beabstandet sein. Um den Abstand weiter zu vergrößern, ist es denkbar, dass zwischen dem Griffstück 15 und der Gewindespindel 13 ein (nicht dargestellten) Distanzstab angeordnet ist. Dadurch kann das Griffstück 15 seitlich des durch die Teigbandfördereinrichtung 1 geförderten Teigbands 5 positionierbar sein. Auf diese Weise kann die Drehung des Griffstücks 15 durch eine Bedienperson erleichtert werden. Dies kann insbesondere bei sehr breiten Teigbändern 5 bzw. sehr breiten Teigbandfördereinrichtungen 1 von Vorteil sein.

Wie im vorliegenden Ausführungsbeispiel, kann die Blende 7 werkzeuglos demontierbar sein. Dazu ist es denkbar, dass sich Flügelschrauben 16 durch die Langlöcher 12 hindurch erstrecken. Die Flügelschrauben können mit einem Innengewinde (nicht sichtbar) eingreifen, das in der Platte 8 und/oder in der Düse 6 vorgesehen sein kann. Im montierten Zustand können die Führungen 12, im vorliegenden Ausführungsbeispiel die Langlöcher 12, mit den Flügelschrauben 16 eingreifen, um den Schieber 10 zu führen. Zum Demontieren können die Flügelschrauben 16 aus der Platte 8 und/oder aus der Düse 6 herausschraubbar und aus den Führungen 12 entnehmbar sein. Dadurch kann es ermöglicht werden, dass durch Herausschrauben der Gewindespindel 13 aus der Mutter 14, bis die Gewindespindel 13 außer Eingriff mit der Mutter 14 ist, die Verbindung zwischen dem Schieber 10 und der Platte 8 getrennt werden kann. Dies kann als ein werkzeugloses Demontieren der Blende 7 angesehen werden.

Es ist denkbar, dass durch Eingriff zwischen den Flügelschrauben 16 und der Düse 6, insbesondere mit dem darin vorgesehenen Innengewinde, die Blende 7 an der Düse 6 montierbar ist. Dementsprechend ist es denkbar, dass durch Herausschrauben der Flügelschrauben 16 aus der Düse 6, insbesondere aus dem darin vorgesehenen Innengewinde, die Blende 7 von der Düse 6 trennbar sein kann. Durch die Verwendung der Flügelschrauben 16 sowie des Griffstücks 15 kann die Blende 7 werkzeuglos demontierbar sein und/oder kann die Blende 7 werkzeuglos von der Düse 6 trennbar sein.

## Patentansprüche

1. Teigbandfördereinrichtung (1) mit einer Vorrichtung (3) zum Zuführen eines pastösen Lebensmittels (3), insbesondere Fett oder Butter, wobei die Vorrichtung (2) eine Düse (6) und eine verstellbare Blende (7) umfasst, die eine Platte (8) mit einer Öffnung (9) und einen Schieber (10) enthält, wobei der Schieber (10) dazu konfiguriert ist, die Öffnung (9) mindestens teilweise abzudecken und eine Durchlass-Querschnittsfläche (11) der Blende (7) in einer Zustellrichtung (Z) zu begrenzen, **dadurch gekennzeichnet, dass** der Schieber (10) in einer Verstellrichtung (V) verschiebbar ist, wobei die Verstellrichtung (V) relativ zu der Zustellrichtung (Z) in einem Winkel orientiert ist, der größer als 0 Grad ist.

2. Teigbandfördereinrichtung nach Anspruch 1, wobei der Schieber (10) durch mehrere Führungen (12) führbar ist.

3. Teigbandfördereinrichtung nach Anspruch 1 oder 2, wobei die Führungen (12) an oder in dem Schieber (10) vorgesehen sind.

4. Teigbandfördereinrichtung nach einem der vorangehenden Ansprüche, wobei der Schieber (10) durch eine Gewindespindel (13) verschiebbar ist.

5. Teigbandfördereinrichtung nach Anspruch 4, wobei die Gewindespindel (13) mit einem Griffstück (15) verbunden ist, welches seitlich, insbesondere in der Verstellrichtung (V), von der Blende (7) beabstandet ist.

6. Teigbandfördereinrichtung nach einem der vorangehenden Ansprüche, wobei die Blende (7) werkzeuglos demontierbar ist.

7. Teigbandfördereinrichtung nach einem der vorangehenden Ansprüche, wobei die Blende (7) werkzeuglos von der Düse (6) trennbar ist.
